# EUROPEAN PATENT APPLICATION

(11) **EP 4 431 225 A1**
(43) Date of publication of application: **18.09.2024**
(21) Application number: 23732805.9
(22) Date of filing: 29.03.2023
(51) Int. Cl.: B23K 37/00, B08B 5/04

(54) **WELDING DUST REMOVAL DEVICE AND SYSTEM**

(30) Priority: 03.02.2023 CN 202320107423 U
(71) Applicant: Contemporary Amperex Technology Co., Limited, Ningde, Fujian 352100 (CN)
(72) Inventor: ZHANG, Liang, Ningde, Fujian 352100 (CN); ZHONG, Guangcheng, Ningde, Fujian 352100 (CN); SONG, Lei, Ningde, Fujian 352100 (CN); CHEN, Shengdong, Ningde, Fujian 352100 (CN); ZHUO, Xuesong, Ningde, Fujian 352100 (CN)
(74) Representative: Gong, Jinping
(86) International application number: PCT/CN2023/084758
(87) International publication number: WO 2024/159607

(57) **Abstract**

This application relates to the field of battery manufacturing technologies and provides a welding dust removal apparatus and system. The welding dust removal apparatus includes a dust removal pipe, one end of the dust removal pipe communicating with a suction apparatus; and dust suction assemblies, each including a first dust suction member and a second dust suction member, where the first dust suction member has a first dust suction opening and a first outlet communicating with each other, the second dust suction member has a second dust suction opening and a second outlet communicating with each other, an electrode assembly is placed between the first dust suction opening and the second dust suction opening, and both the first outlet and the second outlet communicate with the other end of the dust removal pipe. According to the technical solutions of this application, the effect of removing dust from a positive electrode tab and a negative electrode tab of electrode assemblies can be improved and dust inside the electrode assemblies can be suctioned out, thereby helping to improve the later use performance of batteries.

## Description

### CROSS-REFERENCE TO RELATED APPLICATIONS

This application claims priority to Chinese patent application No. 202320107423.8, filed on February 3, 2023 and entitled "WELDING DUST REMOVAL APPARATUS AND SYSTEM", which is incorporated herein by reference in its entirety.

### TECHNICAL FIELD

This application relates to the field of battery manufacturing technologies, and specifically to a welding dust removal apparatus and system.

### BACKGROUND

This section provides only background information related to this disclosure and the background information does not necessarily belong to the prior art.

Currently, in the battery manufacturing industry, a large amount of dust (for example, copper and aluminum powder granules) is generated during ultrasonic tab welding. Therefore, in the case of ultrasonic welding, it is usually necessary to remove dust from battery tabs to prevent metal dust from spattering. In the related art, during ultrasonic tab welding, some dust granules enter battery cells, and conventional ultrasonic welding dust removal apparatuses can remove only dust granules on the surface of battery tabs and have difficulty in completely removing dust granules inside battery cells. This affects the use performance of batteries.

### SUMMARY

In view of the foregoing problems, this application provides a welding dust removal apparatus and system to improve the effect of removing dust from battery tabs, thereby improving the use performance of batteries.

According to a first aspect, this application provides a welding dust removal apparatus including: a dust removal pipe, one end of the dust removal pipe communicating with a suction apparatus; and dust suction assemblies, each including a first dust suction member and a second dust suction member, where the first dust suction member has a first dust suction opening and a first outlet communicating with each other, the second dust suction member has a second dust suction opening and a second outlet communicating with each other, an electrode assembly is placed between the first dust suction opening and the second dust suction opening, and both the first outlet and the second outlet communicate with the other end of the dust removal pipe.

In the welding dust removal apparatus provided in this application, the dust removal pipe communicates with the suction apparatus, the dust suction assemblies communicate with the dust removal pipe, and the electrode assembly is disposed between the first dust suction opening and the second dust suction opening. In this way, when the suction apparatus is operating, under the action of negative pressure, dust generated during welding of the positive electrode tab and the negative electrode tab and dust entering the electrode assembly during welding enter the dust removal pipe through the first dust suction opening and the second dust suction opening and then are discharged, implementing rapid dust removal at the positive electrode tab and the negative electrode tab with desirable dust removal effects and dust removal efficiency, and helping to improve the service life and use performance of batteries.

In addition, the welding dust removal apparatus according to this application may further have the following additional technical features.

In some embodiments of this application, one of the first dust suction opening and the second dust suction opening is disposed facing toward a positive electrode tab of the electrode assembly, and the other is disposed facing toward a negative electrode tab of the electrode assembly.

In this embodiment, the first dust suction opening is disposed corresponding to the positive electrode tab of the electrode assembly and the second dust suction opening is disposed corresponding to the negative electrode tab of the electrode assembly, or the first dust suction opening is disposed corresponding to the negative electrode tab of the electrode assembly and the second dust suction opening is disposed corresponding to the positive electrode tab of the electrode assembly. This helps to improve the efficiency of suctioning dust on the surface of the positive electrode tab and the negative electrode tab of the electrode assembly by the first dust suction opening and the second dust suction opening under the action of negative pressure suction and facilitates suction of dust inside the electrode assemblies.

In some embodiments of this application, the dust removal pipe includes a main dust removal pipe, where the main dust removal pipe is connected to the suction apparatus on one end, and the main dust removal pipe communicates with a first connecting pipe and a second connecting pipe on the other end; and a first dust removal sub-pipe and a second dust removal sub-pipe, where one end of the first dust removal sub-pipe communicates with the first connecting pipe, and one end of the second dust removal sub-pipe communicates with the second connecting pipe; where the first outlet communicates with the other end of the first dust removal sub-pipe, and the second outlet communicates with the other end of the second dust removal sub-pipe.

In this embodiment, the first dust suction member communicates with the main dust removal pipe through the first dust removal sub-pipe, and the second dust suction member communicates with the main dust removal pipe through the second dust removal sub-pipe, so that an air speed of each of the first dust suction opening and the second dust suction opening can be controlled to separately control the air speeds of the first dust suction opening and the second dust suction opening, so as to guarantee the effect of removing dust from the positive electrode tab and the negative electrode tab of the electrode assembly by the first dust suction member and the second dust suction member respectively.

In some embodiments of this application, the dust removal pipe further includes a first adapting pipe and a second adapting pipe, where the first adapting pipe communicates with both the first dust removal sub-pipe and the first outlet, and the second adapting pipe communicates with both the second dust removal sub-pipe and the second outlet.

In this embodiment, the first adapting pipe and the second adapting pipe are disposed, and specifically, the first adapting pipe and the second adapting pipe are disposed transversely, so as to facilitate communication of the first dust suction member and the second dust suction member with the first dust removal sub-pipe and the second dust removal sub-pipe.

In some embodiments of this application, the first outlet is connected to a first communication sub-pipe, the second outlet is connected to a second communication sub-pipe, and the first communication sub-pipe and the second communication sub-pipe communicate with the first adapting pipe and the second adapting pipe respectively.

In this embodiment, the first dust suction member communicates with the first adapting pipe through the first communication sub-pipe, and the second dust suction member communicates with the second adapting pipe through the second communication sub-pipe, facilitating communication of the first dust suction member and the second dust suction member with the first adapting pipe and the second adapting pipe respectively and helping to reduce the volume of the first dust suction member and the second dust suction member.

In some embodiments of this application, the first communication sub-pipe and the second communication sub-pipe are flexible pipes, and a position of the first dust suction opening relative to the second dust suction opening is adjustable.

In this embodiment, with the first communication sub-pipe and the second communication sub-pipe provided as flexible pipes, the position of the first dust suction opening relative to the second dust suction opening can be adjusted by adjusting the shape of the first communication sub-pipe and the second communication sub-pipe.

In some embodiments of this application, an air speed of the first dust suction opening is not lower than 24 m/s; and/or an air speed of the second dust suction opening is not lower than 24 m/s.

In this embodiment, the air speed of the first dust suction opening being not lower than 24 m/s means that the air speed at the first dust suction opening is high and that negative pressure suction generated at the first dust suction opening is large, helping to improve the effect of removing dust from the positive electrode tab by the first dust suction opening during suction. Similarly, the air speed of the second dust suction opening being not lower than 24 m/s either helps to improve the effect of removing dust from the negative electrode tab by the second dust suction opening during suction. Specifically, the air speeds of the first dust suction opening and the second dust suction opening may be controlled by controlling operating power of the suction apparatus.

In some embodiments of this application, the number of the dust suction assemblies is N, and the N dust suction assemblies are symmetrically disposed in two groups; where N is an even number.

In this embodiment, providing an even number of dust suction assemblies means increasing the number of the dust suction assemblies. In this way, dust can be removed from positive electrode tabs and negative electrode tabs of at least two electrode assemblies at the same time, helping to improve the overall dust removal efficiency. In addition, symmetrically disposing the even number of dust suction assemblies in two groups means regularity of the product as a whole, helping to improve the overall appearance appealing of the product.

In some embodiments of this application, the welding dust removal apparatus further includes: fixing plates; and a first position adjustment assembly and a second position adjustment assembly, where the first position adjustment assembly and the second position adjustment assembly are movably connected to two opposite sides of the fixing plates, the first position adjustment assembly is connected to the first dust suction member, the first position adjustment assembly is configured to adjust position of the first dust suction member, the second position adjustment assembly is connected to the second dust suction member, and the second position adjustment assembly is configured to adjust position of the second dust suction member.

In this embodiment, with the first position adjustment assembly and the second position adjustment assembly movably connected to the two sides of the fixing plates respectively, the first position adjustment assembly and the second position adjustment assembly each can move relative to the fixing plate and are locked when moving to a preset position. In addition, the first position adjustment assembly and the second position adjustment assembly are connected to the first dust suction member and the second dust suction member respectively. Therefore, the first dust suction member can be driven to move when the first position adjustment assembly moves relative to the fixing plate, and the second dust suction member can be driven to move when the second adjustment assembly moves relative to the fixing plate. This can allow adjustment of the distance between the first dust suction member and the second dust suction member and the position of the first dust suction member and the second dust suction member relative to the positive electrode tab and the negative electrode tab, adapting to electrode assemblies of different sizes, so as to remove dust from electrode assemblies of different sizes and thus improving product versatility.

In some embodiments of this application, the number of the fixing plates is two, and the two fixing plates are spaced apart; and the number of the dust suction assemblies is four, the four dust suction assemblies are symmetrically disposed in two groups on two opposite sides of the fixing plates, the first dust suction member of each dust suction assembly and the first position adjustment assembly are spaced apart, and the second dust suction member of each dust suction assembly and the second position adjustment assembly are spaced apart.

In this embodiment, each fixing plate is provided with two dust suction assemblies correspondingly, and the two fixing plates are spaced apart to facilitate adjustment of the position of the dust suction assembly relative to the electrode assembly.

In some embodiments of this application, the welding dust removal apparatus further includes a third position adjustment assembly and a fourth position adjustment assembly that are disposed between the first position adjustment assembly and the second position adjustment assembly and movably connected to the fixing plates, where the third position adjustment assembly is connected to one second dust suction member and one first dust suction member that are adjacent to each other and that are located between the two fixing plates, and the fourth position adjustment assembly is connected to the other second dust suction member and the other first dust suction member that are adjacent to each other and that are located between the two fixing plates; where the first position adjustment assembly and the second position adjustment assembly are disposed on the two fixing plates respectively and located on facing-away sides of the two fixing plates respectively, the first position adjustment assembly is connected to two first dust suction members disposed on one of the facing-away sides of the two fixing plates, and the second position adjustment assembly is connected to two second dust suction members disposed on one of the facing-away sides of the two fixing plates.

In this embodiment, the third position adjustment assembly and the fourth position adjustment assembly are added. The third position adjustment assembly and the fourth position adjustment assembly are located between the first position adjustment assembly and the second position adjustment assembly so that the first position adjustment assembly and the second position adjustment assembly respectively drive two first dust suction members and two second dust suction members located on the facing-away sides of the two fixing plates to move, and the third position adjustment assembly and the fourth position adjustment assembly respectively drive two first dust suction members and two second dust suction members located on facing-toward sides of the two fixing plates to move. This can allow position adjustment for each first dust suction member and second dust suction member and thus position adjustment for each first dust suction member and second dust suction member, so as to adapt to dust removal for different sizes of electrode assemblies.

In some embodiments of this application, the first dust suction member includes a first negative pressure nozzle, the first negative pressure nozzle having the first dust suction opening; and the second dust suction member includes a second negative pressure nozzle, the second negative pressure nozzle having the second dust suction opening.

In this embodiment, the size of the first dust suction opening is larger than the size of the positive electrode tab, ensuring that the first dust suction opening can cover the positive electrode tab when its position relative to the positive electrode tab is adjusted, so as to guarantee the effect of removing dust from the positive electrode tab by the first dust suction opening. Similarly, the size of the second dust suction opening is larger than the size of the negative electrode tab, ensuring that the second dust suction opening can cover the negative electrode tab when its position relative to the negative electrode tab is adjusted, so as to guarantee the effect of removing dust from the negative electrode tab by the second dust suction opening.

According to a second aspect, this application provides a welding dust removal system including: a support base; a first moving mechanism disposed on the support base and configured to move relative to the support base along a horizontal direction; a second moving mechanism connected to the first moving mechanism and configured to move relative to the first moving mechanism along a vertical direction; adhering mechanisms connected to the second moving mechanism and configured for adhesion of the electrode assembly; and the welding dust removal apparatus according to any one of the embodiments of the first aspect and configured to remove dust from the positive electrode tab and the negative electrode tab of the electrode assembly.

In the welding dust removal system provided in this application, the adhering mechanism can move to above the electrode assembly under the driving of the first moving mechanism and the second moving mechanism, and after adhesion of the electrode assembly, move the electrode assembly to between the first dust suction member and the second dust suction member under the driving of the first moving mechanism and the second moving mechanism, so that the first dust suction member and the second dust suction member remove dust from the positive electrode tab and the negative electrode tab of the electrode assembly.

In some embodiments of this application, the adhering mechanism includes: a vacuum adhering member, where the vacuum adhering member is provided with a cavity, the cavity communicates with a vacuumizing apparatus, and adhering holes configured for adhesion of the electrode assembly are provided at the bottom of the vacuum adhering member; and a buffering assembly disposed on top of the vacuum adhering member, where the buffering assembly is connected to the fixing plate of the welding dust removal apparatus and configured to provide buffering when the electrode assembly adheres to the vacuum adhering member.

In this embodiment, when the vacuumizing apparatus is operating to exhaust air out of the cavity, the vacuum adhering member of the adhering mechanism can make the electrode assembly adhere to the bottom of the vacuum adhering member. When the vacuum adhering member moves to come into contact with the electrode assembly, the buffering assembly can provide enough buffering to prevent the electrode assembly from damage caused when the vacuum adhering member comes into overwhelming contact with the electrode assembly, thereby guaranteeing the safety of the electrode assembly adhering to the vacuum adhering member.

### BRIEF DESCRIPTION OF DRAWINGS

Those of ordinary skill in the art can clearly understand various other advantages and benefits by reading the detailed description of the preferred embodiments below. The accompanying drawings are merely intended to illustrate the preferred embodiments and are not interpreted as limiting this application. In addition, throughout the accompanying drawings, the same reference signs represent the same components. In the accompanying drawings:
FIG. 1 is a schematic diagram of a three-dimensional structure of a welding dust removal apparatus according to some embodiments of this application;
FIG. 2 is an enlarged schematic structural diagram of portion A in FIG. 1;
FIG. 3 is a schematic structural exploded view of a welding dust removal apparatus according to some embodiments of this application;
FIG. 4 is a schematic structural diagram of a dust suction assembly according to some embodiments of this application;
FIG. 5 is a schematic diagram of a three-dimensional structure of a welding dust removal system according to some embodiments of this application;
FIG. 6 is a partial schematic structural diagram of a welding dust removal system according to some embodiments of this application;
FIG. 7 is another partial schematic structural diagram of a welding dust removal system according to some embodiments of this application; and
FIG. 8 is a schematic structural diagram of an adhering mechanism according to some embodiments of this application.

### Reference signs:

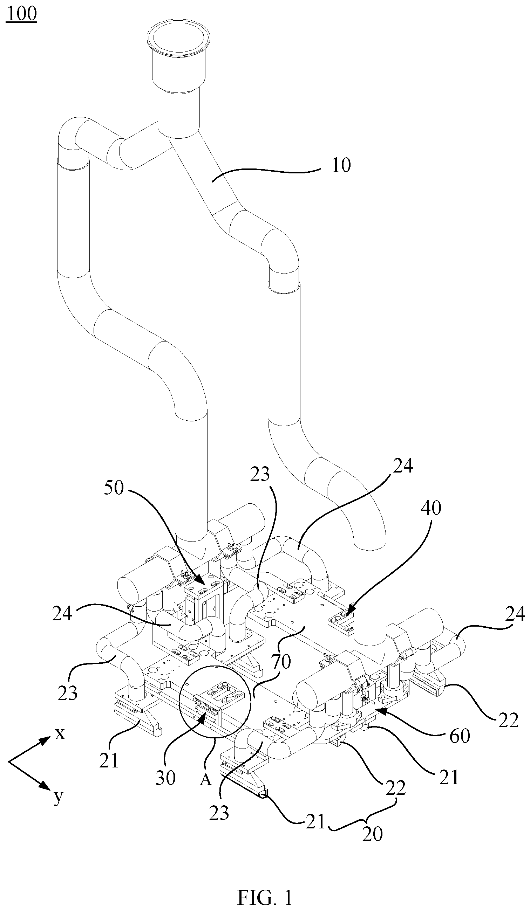

welding dust removal system 1000;
welding dust removal apparatus 100; support base 200; first moving mechanism 300; second moving mechanism 400; adhering mechanism 500; electrode assembly 600;
dust removal pipe 10; dust suction assembly 20; first position adjustment assembly 30; second position adjustment assembly 40; third position adjustment assembly 50; fourth position adjustment assembly 60; fixing plate 70;
main dust removal pipe 11; first dust removal sub-pipe 12; second dust removal sub-pipe 13; first adapting pipe 14; second adapting pipe 15; first dust suction member 21; second dust suction member 22; first communication sub-pipe 23; second communication sub-pipe 24; first connecting plate 31; second connecting plate 32; third connecting plate 33; fourth connecting plate 34; fifth connecting plate 41; sixth connecting plate 42; seventh connecting plate 43; eighth connecting plate 44; U-shaped plate 51; ninth connecting plate 52; dual shaft cylinder 53; cylinder connecting plate 54; adapter sleeve 55; fixed connecting plate 71;
first connecting pipe 111; second connecting pipe 112; first dust suction opening 211; first outlet 212; second dust suction opening 221; second outlet 222; first U-shaped hole 311; second U-shaped hole 321; third U-shaped hole 322; vacuum adhering member 501; restraining groove 502; telescopic rod mechanism 503; restraining connector 504; positive electrode tab 601; and negative electrode tab 602;
where in the coordinate system of FIG. 1, the x-axis direction is a first direction and the y-axis direction is a second direction.

### DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In the description of the embodiments of this application, the terms "first", "second" and the like are merely intended to distinguish between different objects, and shall not be understood as any indication or implication of relative importance or any implicit indication of the number, sequence or primary-secondary relationship of the technical features indicated. In the description of the embodiments of this application, "a plurality of" means at least two unless otherwise specifically stated.

In this specification, reference to "embodiment" means that specific features, structures or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of A, presence of both A and B, and presence of B. In addition, a character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "perpendicular", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application rather than indicating or implying that the apparatuses or components mentioned must have specific orientations or must be constructed or manipulated according to specific orientations, and therefore shall not be construed as any limitations on embodiments of this application.

In the description of the embodiments of this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or electrical connection, and may refer to a direct connection, an indirect connection via an intermediate medium, or an interaction between two elements. Persons of ordinary skill in the art can understand specific meanings of these terms in this application as appropriate to specific situations.

Currently, from a perspective of market development, application of electric vehicle batteries is becoming more and more extensive. Traction batteries have been widely used in energy storage power supply systems such as hydroelectric power plants, thermal power plants, wind power plants, and solar power plants, and many other fields including electric transportation tools such as electric bicycles, electric motorcycles, and electric vehicles, military equipment, and aerospace. With continuous expansion of application fields of traction batteries, market demands for traction batteries are also expanding.

In processing and manufacturing processes of electric vehicle batteries, battery tabs need to experience ultrasonic welding, and a large amount of dust (for example, copper and aluminum powder granules) is generated during ultrasonic welding. Therefore, in the case of ultrasonic welding, it is usually necessary to remove dust from battery tabs to prevent metal dust from spattering while such spattering affects the use performance of batteries.

During ultrasonic tab welding, because electrode plates of an electrode assembly are wound or stacked with some gaps between the electrode plates, some dust granules enter the electrode assembly. Conventional ultrasonic welding dust removal apparatuses remove dust from battery tabs only during ultrasonic welding and do not completely remove dust granules from the surface of battery tabs, let alone complete removal of dust granules inside electrode assemblies. This affects the later use performance of batteries.

To solve the problem of incomplete dust removal and poor dust removal effects affecting the later use performance of batteries for conventional ultrasonic welding dust removal apparatuses, in this application, a welding dust removal apparatus is designed, in which: a first dust suction opening and a second dust suction opening of a first dust suction member and a second dust suction member are disposed corresponding to a positive electrode tab and a negative electrode tab of an electrode assembly respectively, a first outlet and a second outlet of the first dust suction member and the second dust suction member communicate with a dust removal pipe, the dust removal pipe communicates with a suction apparatus, and the suction apparatus provides suction at the first dust suction opening and the second dust suction opening, so that dust is suctioned from the surface of positive electrode tabs and negative electrode tabs, and dust is also suctioned out of electrode assemblies, improving the overall dust removal effects and improving the later use performance of batteries.

A welding dust removal apparatus 100 disclosed in the embodiments of this application is not only applicable to dust removal for a positive electrode tab and a negative electrode tab of electrode assemblies, but also applicable to dust removal for welded parts of automobiles, ships, and the like.

For ease of description, a welding dust removal apparatus for battery tab of an embodiment of this application is used for description of the following embodiments.

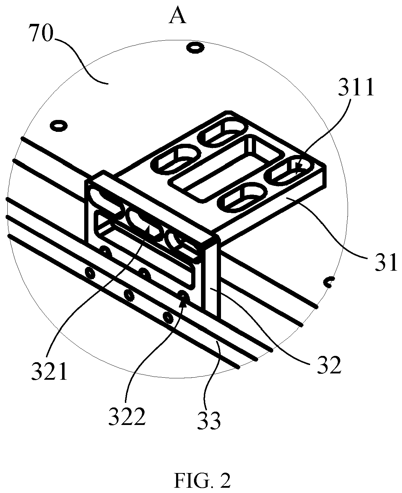

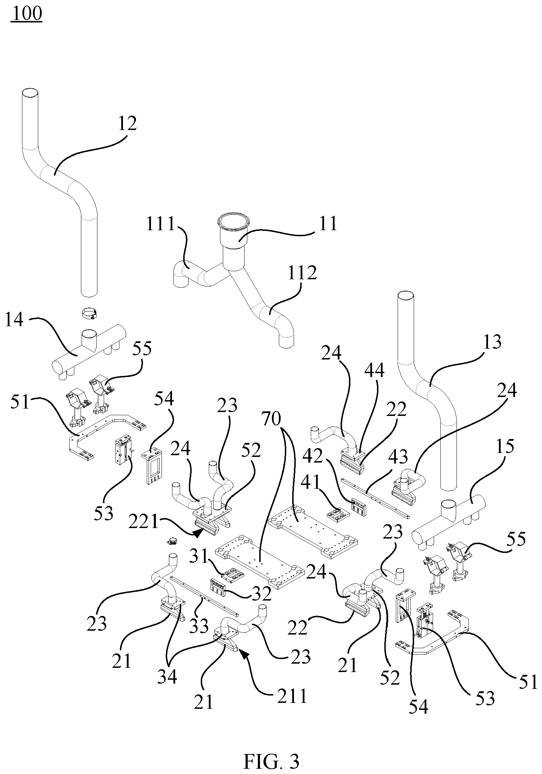

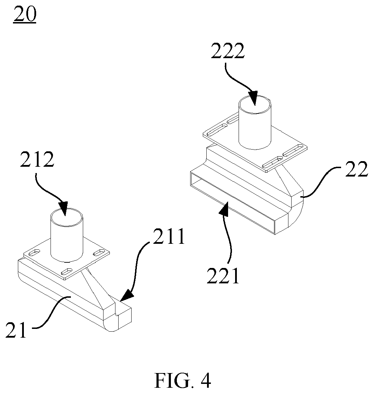

Refer to FIGs. 1 to 4. FIG. 1 is a schematic diagram of a three-dimensional structure of a welding dust removal apparatus according to some embodiments of this application. FIG. 2 is an enlarged schematic structural diagram of portion A in FIG. 1. FIG. 3 is a schematic structural exploded view of a welding dust removal apparatus according to some embodiments of this application. FIG. 4 is a schematic structural diagram of a dust suction assembly according to some embodiments of this application. According to some embodiments of this application, a first aspect of this application provides a welding dust removal apparatus 100 including a dust removal pipe 10 and dust suction assemblies 20. One end of the dust removal pipe 10 communicates with a suction apparatus. The dust suction assembly 20 includes a first dust suction member 21 and a second dust suction member 22, where the first dust suction member 21 has a first dust suction opening 211 and a first outlet 212 communicating with each other, the second dust suction member 22 has a second dust suction opening 221 and a second outlet 222 communicating with each other, the first dust suction opening 211 is disposed facing toward a positive electrode tab 601 of an electrode assembly 600, the second dust suction opening 221 is disposed facing toward a negative electrode tab 602 of the electrode assembly 600, and both the first outlet 212 and the second outlet 222 communicate with the other end of the dust removal pipe 10.

The dust removal pipe 10 communicates with the dust suction assembly 20 and the suction apparatus. The suction apparatus is configured to provide suction so that negative pressure is generated at the first dust suction opening 211 of the first dust suction member 21 and the second dust suction opening 221 of the second dust suction member 22, enabling dust from the positive electrode tab 601 and the negative electrode tab 602 and inside the electrode assembly 600 to be suctioned into the dust removal pipe 10 under the action of the negative pressure suction and then discharged.

For example, the suction apparatus is a draught fan.

In the welding dust removal apparatus 100 provided in this embodiment of this application, the first dust suction member 21 and the second dust suction member 22 of the dust suction assembly 20 communicate with the dust removal pipe 10, and the dust removal pipe 10 communicates with the suction apparatus. Specifically, the first dust suction opening 211 of the first dust suction member 21 is disposed corresponding to the positive electrode tab 601 of the electrode assembly 600, and the second dust suction opening 221 of the second dust suction member 22 is disposed corresponding to the negative electrode tab 602 of the electrode assembly 600. In this way, when the suction apparatus is operating, under the action of negative pressure suction, dust generated during welding of the positive electrode tab 601 and the negative electrode tab 602 and dust entering the electrode assembly 600 during welding enter the dust removal pipe 10 through the first dust suction opening 211 and the second dust suction opening 221 and then are discharged, implementing rapid dust removal at the positive electrode tab 601 and the negative electrode tab 602 with desirable dust removal effects and dust removal efficiency, and helping to improve the service life and use performance of batteries.

Refer to FIGs. 1 and 3. According to some embodiments of this application, the dust removal pipe 10 includes a main dust removal pipe 11, a first dust removal sub-pipe 12, and a second dust removal sub-pipe 13. The main dust removal pipe 11 is connected to the suction apparatus on one end, and the main dust removal pipe 11 communicates with a first connecting pipe 111 and a second connecting pipe 112 on the other end. One end of the first dust removal sub-pipe 12 communicates with the first connecting pipe 111, and one end of the second dust removal sub-pipe communicates with the second connecting pipe 112. The first outlet 212 communicates with the other end of the first dust removal sub-pipe 12, and the second outlet 222 communicates with the other end of the second dust removal sub-pipe 13.

For example, the main dust removal pipe 11, the first connecting pipe 111, the second connecting pipe 112, the first dust removal sub-pipe 12, and the second dust removal sub-pipe 13 are all flexible pipes.

The first dust suction member 21 communicates with the main dust removal pipe 11 through the first dust removal sub-pipe 12 and the first connecting pipe 111, and the second dust suction member 22 communicates with the main dust removal pipe 11 through the second dust removal sub-pipe 13 and the second connecting sub-pipe 112. To be specific, an air speed of each of the first dust suction opening 211 and the second dust suction opening 221 can be controlled to separately control the air speeds of the first dust suction opening 211 and the second dust suction opening 221, so as to guarantee the effect of removing dust from the positive electrode tab 601 and the negative electrode tab 602 of the electrode assembly 600 by the first dust suction member 21 and the second dust suction member 22 respectively. It can be understood that the air speeds of the first dust suction opening 211 and the second dust suction opening 221 can be reached by controlling the operating power of the suction apparatus or disposing a control valve at each of the first dust removal sub-pipe 12 and the second dust removal sub-pipe 13.

According to some embodiments of this application, the dust removal pipe 10 further includes a first adapting pipe 14 and a second adapting pipe 15, where the first adapting pipe 14 communicates with both the first dust removal sub-pipe 12 and the first outlet 212, and the second adapting pipe 15 communicates with both the second dust removal sub-pipe 13 and the second outlet 222.

In this embodiment, the first adapting pipe 14 and the second adapting pipe 15 are disposed, and specifically, the first adapting pipe 14 and the second adapting pipe 15 are disposed transversely, so as to facilitate communication of the first dust suction member 21 and the second dust suction member 22 with the first dust removal sub-pipe 12 and the second dust removal sub-pipe 13.

Refer to FIGs. 1 and 3. According to some embodiments of this application, the first outlet 212 is connected to a first communication sub-pipe 23, the second outlet 222 is connected to a second communication sub-pipe 24, and the first communication sub-pipe 23 and the second communication sub-pipe 24 communicate with the first dust removal pipe 10 and the second dust removal pipe 10 respectively.

The first dust suction member communicates with the first adapting pipe 14 through the first communication sub-pipe 23, and the second dust suction member 22 communicates with the second adapting pipe 15 through the second communication sub-pipe 24, facilitating communication of the first dust suction member 21 with the first adapting pipe 14, communication of the second dust suction member 22 the second adapting pipe 15, and position adjustment for the first dust suction member 21 and the second dust suction member 22.

According to some embodiments of this application, the first communication sub-pipe 23 and the second communication sub-pipe 24 are flexible pipes.

With the first communication sub-pipe 23 and the second communication sub-pipe 24 provided as flexible pipes, the position of the first dust suction opening 211 relative to the second dust suction opening 221 can be adjusted by adjusting the shape of the first communication sub-pipe 23 and the second communication sub-pipe 24.

According to some embodiments of this application, a distance between the first dust suction opening 211 and the positive electrode tab 601 is not larger than 5 mm, and a distance between the second dust suction opening 221 and the negative electrode tab 602 is not larger than 5 mm.

The distance between the first dust suction opening 211 and the positive electrode tab 601 is set to not larger than 5 mm so as to appropriately reduce the distance between the first dust suction opening 211 and the positive electrode tab 601, helping to improve the effect of removing dust from the positive electrode tab 601 by the first dust suction opening 211 during suction. Similarly, the distance between the second dust suction opening 221 and the negative electrode tab 602 is set to not larger than 5 mm either, helping to improve the effect of removing dust from the negative electrode tab 602 by the second dust suction opening 221 during suction.

It should be noted that the distance between the first dust suction opening 211 and the positive electrode tab 601 and the distance between the second dust suction opening 221 and the negative electrode tab 602 should not be excessively small either to avoid blockage of the first dust suction opening 211 and the second dust suction opening 221 while such blockage affects the suction efficiency of the first dust suction opening 211 and the second dust suction opening 221. For example, the distance between the first dust suction opening 211 and the positive electrode tab 601 is set to 3 mm; and the distance between the second dust suction opening 221 and the negative electrode tab 602 is set to 3 mm.

According to some embodiments of this application, an air speed of the first dust suction opening 211 is not lower than 24 m/s; and an air speed of the second dust suction opening 221 is not lower than 24 m/s.

The air speed of the first dust suction opening is a speed at which air flows through the first dust suction opening 211. The air speed of the second dust suction opening 221 is a speed at which air flows through the second dust suction opening 221.

The air speed of the first dust suction opening being not lower than 24 m/s means that the air speed at the first dust suction opening 211 is high and that negative pressure suction generated at the first dust suction opening 211 is large, helping to improve the effect of removing dust from the positive electrode tab 601 by the first dust suction opening 211 during suction. Similarly, the air speed of the second dust suction opening 221 being not lower than 24 m/s either means that negative pressure generated at the second dust suction opening 221 is large, helping to improve the effect of removing dust from the negative electrode tab 602 by the second dust suction opening 221 during suction. Specifically, the air speeds of the first dust suction opening 211 and the second dust suction opening 221 may be controlled by controlling operating power of the suction apparatus.

Refer to FIGs. 1 and 3. According to some embodiments of this application, the number of the dust suction assemblies 20 is N, and the N dust suction assemblies 20 are symmetrically disposed in two groups; where N is an even number.

Providing an even number of dust suction assemblies 20 means increasing the number of the dust suction assemblies 20. In this way, dust can be removed from positive electrode tabs 601 and negative electrode tabs 602 of at least two electrode assemblies 600 at the same time, helping to improve the overall dust removal efficiency. In addition, symmetrically disposing the even number of dust suction assemblies 20 in two groups means regularity of the product as a whole, helping to improve the overall appearance appealing of the product.

Refer to FIGs. 1 and 2, according to some embodiments of this application, the welding dust removal apparatus 100 further includes fixing plates 70, a first position adjustment assembly 30, and a second position adjustment assembly 40. The first position adjustment assembly 30 and the second position adjustment assembly 40 are movably connected to two opposite sides of the fixing plates 70, the first position adjustment assembly 30 is connected to the first dust suction member 21 and configured to adjust position of the first dust suction member 21, and the second position adjustment assembly 40 is connected to the second dust suction member 22 and configured to adjust position of the second dust suction member 22.

With the first position adjustment assembly 30 and the second position adjustment assembly 40 movably connected to the two opposite sides of the fixing plates 70, the first position adjustment assembly 30 and the second position adjustment assembly 40 each can move relative to the fixing plate 70 and are locked when moving to a preset position.

The first position adjustment assembly 30 and the second position adjustment assembly 40 are connected to the first dust suction member 21 and the second dust suction member 22 respectively. Therefore, the first dust suction member 21 can be driven to move when the first position adjustment assembly 30 moves relative to the fixing plate 70, and the second dust suction member 22 can be driven to move when the second adjustment assembly moves relative to the fixing plate 70. This can allow adjustment of the distance between the first dust suction member 21 and the second dust suction member 22 and the position of the first dust suction member 21 and the second dust suction member 22 relative to the positive electrode tab 601 and the negative electrode tab 602, adapting to electrode assemblies 600 of different sizes, so as to remove dust from electrode assemblies 600 of different sizes and thus improving product versatility.

Refer to FIGs. 1 to 3. According to some embodiments of this application, the first position adjustment assembly 30 includes a first connecting plate 31, a second connecting plate 32, a third connecting plate 33, and a fourth connecting plate 34. The first connecting plate 31 is movably connected to the fixing plate 70 and is configured to move relative to the fixing plate 70 along a first direction on the horizontal plane. The second connecting plate 32 is movably connected to the first connecting plate 31 and configured to move relative to the first connecting plate 31 along a second direction. The third connecting plate 33 is movably connected to the second connecting plate 32 and configured to move relative to the second connecting plate 32 along a vertical direction. The fourth connecting plate 34 is connected to the third connecting plate 33 and the first dust suction member 21. The second direction is perpendicular to the first direction and the vertical direction.

Specifically, the first connecting plate 31 is disposed on an upper surface of the fixing plate 70, and the first connecting plate 31 is provided with first U-shaped holes, the first U-shaped hole extending along the first direction on the horizontal plane. The fixing plate 70 is provided with first connecting holes, and a fastener is inserted into the first U-shaped hole and the first connecting hole so that the first connecting plate 31 is movably connected to the fixing plate 70. The second connecting plate 32 is disposed vertically and provided with second U-shaped holes, and the first connecting plate 31 is provided with second connecting holes. The second U-shaped hole extends along the second direction on the horizontal plane and is perpendicular to the first direction. A fastener is inserted into the second U-shaped hole and the second connecting hole so that the second connecting plate 32 is movably connected to the first connecting plate 31. The second connecting plate 32 is further provided with third U-shaped holes, the third U-shaped hole extending along the vertical direction, and the third connecting plate 33 is provided with third connecting holes. A fastener runs through the third U-shaped hole and the third connecting plate 33 so that the third connecting plate 33 is movably connected to the second connecting plate 32. The fourth connecting plate 34 is fixedly connected to the third connecting plate 33 and the first dust suction member 21. In this way, the first position adjustment assembly 30 can drive the first dust suction member 21 to adjust its position along the first direction and second direction on the horizontal plane and the vertical direction.

Refer to FIGs. 1 and 3. According to some embodiments of this application, the second position adjustment assembly 40 includes: a fifth connecting plate 41, where the fifth connecting plate 41 is movably connected to the fixing plate 70 and configured to move relative to the fixing plate 70 along the first direction on the horizontal plane; a sixth connecting plate 42, where the sixth connecting plate 42 is movably connected to the fifth connecting plate 41 and configured to move relative to the fifth connecting plate 41 along the second direction; a seventh connecting plate 43 movably connected to the sixth connecting plate 42, where the seventh connecting plate 43 is configured to move relative to the sixth connecting plate 42 along the vertical direction; and an eighth connecting plate 44 connected to the seventh connecting plate 43 and the second dust suction member 22; where the second direction is perpendicular to the first direction and the vertical direction.

Specifically, the second position adjustment assembly 40 and the first position adjustment assembly 30 are symmetrically disposed. The fifth connecting plate 41 is disposed on an upper surface of the fixing plate 70, and the fifth connecting plate 41 is provided with fourth U-shaped holes, the fourth U-shaped hole extending along the first direction on the horizontal plane. The fixing plate 70 is further provided with fourth connecting holes, and a fastener is inserted into the fourth U-shaped hole and the fourth connecting hole and movably connected to the fixing plate 70. The sixth connecting plate 42 is disposed vertically and provided with fifth U-shaped holes, and the fifth connecting plate 41 is provided with fifth connecting holes. The fifth U-shaped hole extends along the second direction on the horizontal plane and is perpendicular to the first direction. A fastener is inserted into the fifth U-shaped hole and the fifth connecting hole so that the sixth connecting plate 42 is movably connected to the fifth connecting plate 41. The sixth connecting plate 42 is further provided with sixth U-shaped holes, the sixth U-shaped hole extending along the vertical direction, and the seventh connecting plate 43 is provided with sixth connecting holes. A fastener runs through the sixth U-shaped hole and the sixth connecting plate 42 so that the seventh connecting plate 43 is movably connected to the sixth connecting plate 42. The eighth connecting plate 44 is fixedly connected to the seventh connecting plate 43 and the second dust suction member 22. In this way, the second position adjustment assembly 40 can drive the first dust suction member 21 to adjust its position along the first direction and second direction on the horizontal plane and the vertical direction.

Refer to FIGs. 1 and 2. According to some embodiments of this application, for example, the number of the fixing plates 70 is two, and the two fixing plates 70 are spaced apart; and the number of the dust suction assemblies 20 is four, the four dust suction assemblies 20 are symmetrically disposed in two groups on two opposite sides of the fixing plates 70, the first dust suction member 21 of each dust suction assembly 20 and the first position adjustment assembly 30 are spaced apart, and the second dust suction member 22 of each dust suction assembly 20 and the second position adjustment assembly 40 are spaced apart.

Certainly, the number of the fixing plates 70 may alternatively be larger than two. Two dust suction assemblies 20 are correspondingly provided on each fixing plate 70, and two adjacent fixing plates 70 are spaced apart to facilitate adjustment of the positions of the dust suction assemblies 20 on two opposite sides of each fixing plate 70 and electrode assemblies 600.

Refer to FIGs. 1 and 3. Further, the welding dust removal apparatus 100 further includes a third position adjustment assembly 50 and a fourth position adjustment assembly 60. The third position adjustment assembly 50 and the fourth position adjustment assembly 60 are disposed between the first position adjustment assembly 30 and the second position adjustment assembly 40 and movably connected to the fixing plates 70. The third position adjustment assembly 50 is connected to one second dust suction member 22 and one first dust suction member 21 that are adjacent to each other and that are located between the two fixing plates, and the fourth position adjustment assembly 60 is connected to the other second dust suction member 22 and the other first dust suction member 21 that are adjacent to each other and that are located between the two fixing plates 70. The first position adjustment assembly 30 and the second position adjustment assembly are disposed on the two fixing plates 70 respectively and located on facing-away sides of the two fixing plates 70, the first position adjustment assembly 30 is connected to two first dust suction members 21 disposed on one of the facing-away sides of the two fixing plates 70, and the second position adjustment assembly 40 is connected to two second dust suction members 22 disposed on one of the facing-away sides of the two fixing plates 70.

In this embodiment, the first position adjustment assembly 30 is configured to adjust the position of the two first dust suction members 21 on one of the facing-away sides of the two fixing plates 70, and the second position adjustment assembly 40 is configured to adjust the position of the two second dust suction members 22 on one of the facing-away sides of the two fixing plates 70.

The third position adjustment assembly and the fourth position adjustment assembly 60 are movably connected to the fixing plates 70. To be specific, the third position adjustment assembly 50 and the fourth position adjustment assembly 60 each can move relative to the fixing plate 70 and can be locked when moving to a preset position.

The third position adjustment assembly 50 and the fourth position adjustment assembly 60 are added. The third position adjustment assembly 50 and the fourth position adjustment assembly 60 are located between the first position adjustment assembly 30 and the second position adjustment assembly 40 so that the first position adjustment assembly 30 and the second position adjustment assembly 40 respectively drive two first dust suction members 21 and two second dust suction members 22 located on the facing-away sides of the two fixing plates 70 to move, and the third position adjustment assembly 50 and the fourth position adjustment assembly 60 respectively drive two first dust suction members 21 and two second dust suction members 22 located on facing-toward sides of the two fixing plates 70 to move. This can allow position adjustment for each first dust suction member 21 and second dust suction member 22 and thus position adjustment for each first dust suction member 21 and second dust suction member 22, so as to adapt to dust removal for different sizes of electrode assemblies 600.

Specifically, the third position adjustment assembly 50 and the fourth position adjustment assembly 60 are symmetrically disposed and each include a U-shaped plate 51, a dual shaft cylinder 53 assembly, and a ninth connecting plate 52. The ninth connecting plate 52 is connected to the fixing plates 70 and provided with two seventh U-shaped holes, and the two seventh U-shaped holes extend along the first direction on the horizontal plane. The first communication sub-pipe 23 and the second communication sub-pipe 24 connected to the first dust suction member 21 and the second dust suction member 22 adjacent to each other are inserted into the two seventh U-shaped holes respectively and can move along the first direction on the horizontal plane. The U-shaped plates 51 of the third position adjustment assembly 50 and the fourth position adjustment assembly 60 are connected to the first adapting pipe 14 and the second adapting pipe 15 respectively through adapter sleeves 55, and each U-shaped plate 51 is provided with eighth U-shaped holes at both ends, the eighth U-shaped hole extending along the second direction on the horizontal plane. The U-shaped plate 51 is movably connected to the two fixing plates 70 along the second direction on the horizontal plane by fasteners. The dual shaft cylinder 53 assembly includes a dual shaft cylinder 53 and a cylinder connecting plate 54 fixedly connected to a piston rod of the dual shaft cylinder 53, and the cylinder connecting plate 54 is provided with ninth U-shaped holes extending along the vertical direction. The ninth connecting plate 52 is provided with seventh connecting holes on a side facing toward the cylinder connecting plate 54. A fastener is inserted into the eighth U-shaped hole and the seventh connecting hole and the cylinder connecting plate 54 and the ninth connecting plate 52 are movably connected in the vertical direction, so that when operating, the dual shaft cylinder 53 can drive the first dust suction member 21 and the second dust suction member 22 adjacent to each other to move along the vertical direction.

According to some embodiments of this application, the first dust suction member 21 includes a first negative pressure nozzle, the first negative pressure nozzle having the first dust suction opening 211; and the second dust suction member 22 includes a second negative pressure nozzle, the second negative pressure nozzle having the second dust suction opening 221.

For example, cross-sections of the first dust suction opening 211 and the second dust suction opening 221 are rectangular or U-shaped. The size of the first dust suction opening 211 is larger than the size of the positive electrode tab 601, and the size of the second dust suction opening 221 is larger than the size of the negative electrode tab 602.

The size of the first dust suction opening 211 being larger than the size of the positive electrode tab 601 ensures that a suction surface of the first dust suction opening 211 can completely cover the positive electrode tab 601. In addition, because position adjustment for the first dust suction member 21 is fine adjustment, when the position of the first dust suction member 21 relative to the positive electrode tab 601 is adjusted, the suction surface of the first dust suction opening 211 can still cover the positive electrode tab 601, so as to guarantee the effect of removing dust from the positive electrode tab 601 by the first dust suction opening 211. Similarly, the size of the second dust suction opening 221 being larger than the size of the negative electrode tab 602 means that a suction surface of the second dust suction opening 221 can completely cover the negative electrode tab 602. In addition, when the position of the second dust suction member 22 relative to the negative electrode tab 602 is adjusted, the suction surface of the second dust suction opening 221 can still cover the negative electrode tab 602, so as to guarantee the effect of removing dust from the negative electrode tab 602 by the second dust suction opening 221.

According to some embodiments of this application, refer to FIGs. 1 and 2. This application provides a welding dust removal apparatus 100 for battery tab including: a suction apparatus, a main dust removal pipe 11 communicating with the suction apparatus, a first dust removal sub-pipe 12 and a second dust removal sub-pipe 13 communicating with the main dust removal pipe 11, a first adapting pipe 14 and a second adapting pipe 15 communicating with the first dust removal sub-pipe 12 and the second dust removal sub-pipe 13 respectively, first flexible pipes and second flexible pipes communicating with the first adapting pipe 14 and the second adapting pipe 15 respectively, first negative pressure nozzles and second negative pressure nozzles communicating with the first flexible pipes and the second flexible pipes respectively, two fixing plates 70, a first position adjustment assembly 30, a second position adjustment assembly 40, a third position adjustment assembly 50, and a fourth position adjustment assembly 60. The first negative pressure nozzle has a first dust suction opening 211, and the second negative pressure nozzle has a second dust suction opening 221. The first dust suction opening 211 and the second dust suction opening 221 are provided facing toward a positive electrode tab 601 and a negative electrode tab 602 of an electrode assembly 600 respectively. In addition, a distance between the first dust suction opening 211 and the positive electrode tab 601 is not larger than 5 mm, and a distance between the second dust suction opening 221 and the negative electrode tab 602 is not larger than 5 mm. An air speed of each of the first dust suction opening 211 and the second dust suction opening 221 is not lower than 24 m/s.

Specifically, the number of both the first negative pressure nozzles and the second negative pressure nozzles is four. Two first negative pressure nozzles and two second negative pressure nozzles are symmetrically disposed in two groups on two facing-away sides of the two fixing plates 70, and the other two first negative pressure nozzles and two second negative pressure nozzles are disposed in two groups on facing-toward sides of the two fixing plates 70. The first position adjustment assembly 30 and the second position adjustment assembly 40 are symmetrically disposed and movably connected to the two fixing plates 70, and the first position adjustment assembly 30 is connected to two first negative pressure nozzles on one of the facing-away sides of the two fixing plates 70 and configured to adjust the position of the two first negative pressure nozzles. The second position adjustment assembly 40 is connected to two second negative pressure nozzles on one of the facing-away sides of the two fixing plates 70 and configured to adjust the position of the two second negative pressure nozzles. The third position adjustment assembly 50 and the fourth position adjustment assembly 60 are symmetrically disposed, located between the first position adjustment assembly 30 and the second position adjustment assembly 40, and movably connected to the two fixing plates 70. The third position adjustment assembly 50 is connected to one group of the first negative pressure nozzle and second negative pressure nozzle on the facing-toward sides of the two fixing plates 70 and configured to adjust the position of the two nozzles. The fourth position adjustment assembly 60 is connected to the other group of the first negative pressure nozzle and second negative pressure nozzle on the facing-toward sides of the two fixing plates 70 and configured to adjust the position of the two nozzles. The foregoing technical solutions can not only effectively improve the effect of removing dust from the positive electrode tab 601 and negative electrode tab 602 of the electrode assembly 600, but also be applied to electrode assemblies 600 of different sizes, improving the product versatility.

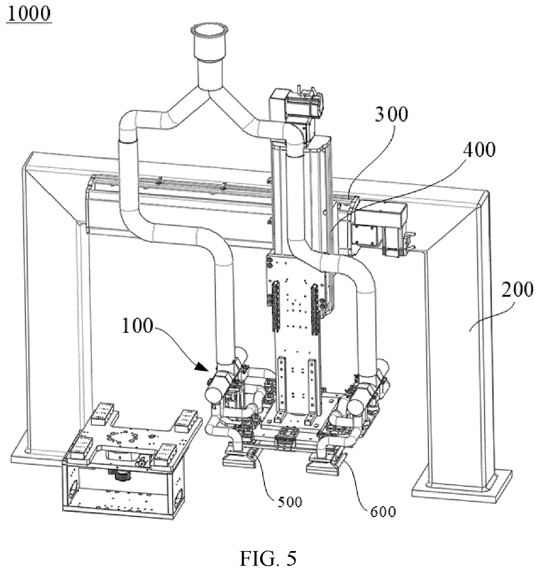

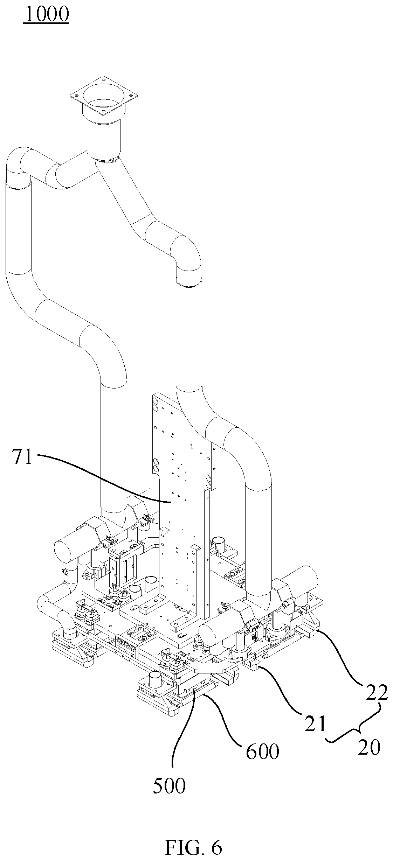

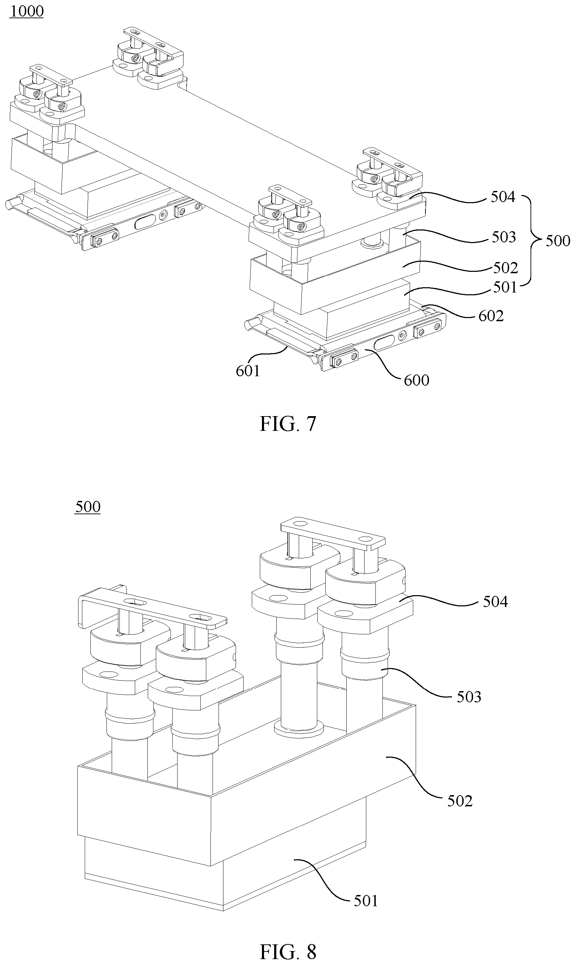

Refer to FIGs. 5 to 7. FIG. 5 is a schematic diagram of a three-dimensional structure of a welding dust removal system 1000 according to some embodiments of this application. FIG. 6 is a partial schematic structural diagram of a welding dust removal system 1000 according to some embodiments of this application. FIG. 7 is another partial schematic structural diagram of a welding dust removal system 1000 according to some embodiments of this application. According to some embodiments of this application, a second aspect of this application further provides a welding dust removal system 1000 including: a support base 200, a first moving mechanism 300, a second moving mechanism 400, adhering mechanisms 500, and a welding dust removal apparatus 100 according to any one of the embodiments of the first aspect. The first moving mechanism 300 is disposed on the support base 200 and configured to move relative to the support base 200 along a horizontal direction. The second moving mechanism 400 is connected to the first moving mechanism 300 and configured to move relative to the first moving mechanism 300 along a vertical direction. The adhering mechanism 500 is connected to the second moving mechanism 400 and configured for adhesion of an electrode assembly 600. The welding dust removal apparatus 100 is configured to remove dust from a positive electrode tab 601 and a negative electrode tab 602 of the electrode assembly 600.

For example, the first moving mechanism 300 includes first slide rails disposed on the support base 200 and a first slide block slidably connected to the first slide rails, and the first slide rail extending along the horizontal direction. The second moving mechanism 400 includes second slide rails connected to the first slide block and a second slide block slidably connected to the second slide rails, the second slide block is connected to a fixed connecting plate 71, and the fixed connecting plate 71 is fixedly connected to the two fixing plates 70 of the welding dust removal apparatus 100. Two adhering mechanisms 500 are provided at the bottom of each fixing plate 70, and driven by the first moving mechanism 300 and the second moving mechanism 400, the two adhering mechanisms 500 can move to the top of the electrode assembly 600 to have the electrode assembly 600 adhere to the bottom. In addition, under the driving of the first moving mechanism 300 and the second moving mechanism 400, the positive electrode tab 601 and the negative electrode tab 602 of the electrode assembly 600 can be driven to correspond to the first negative pressure nozzle and the second negative pressure nozzle of the welding dust removal apparatus 100 respectively. The first negative pressure nozzle and the second negative pressure nozzle are driven by the suction apparatus to suction dust from the positive electrode tab 601 and the negative electrode tab 602 and inside the electrode assembly 600, thereby effectively removing dust generated during welding of the electrode assembly 600 and helping to improve the use performance of batteries.

Refer to FIGs. 7 and 8. FIG. 8 is a schematic structural diagram of an adhering mechanism 500 according to some embodiments of this application. According to some embodiments of this application, the adhering mechanism 500 includes a vacuum adhering member 501 and a buffering assembly. The vacuum adhering member 501 is provided with a cavity, the cavity communicating with a vacuumizing apparatus, and adhering holes configured for adhesion of the electrode assembly 600 are provided at the bottom of the vacuum adhering member 501. The buffering assembly is disposed on top of the vacuum adhering member 501, where the buffering assembly is connected to the fixing plate 70 of the welding dust removal apparatus and configured to provide buffering when the electrode assembly 600 adheres to the vacuum adhering member 501.

The vacuum adhering member has the cavity, the cavity is provided with the adhering holes at the bottom and communication holes on the circumference, where the communicating hole communicates with the vacuumizing apparatus. The vacuumizing apparatus is configured to exhaust gas out of the cavity, and the electrode assembly 600 adheres to the bottom of the vacuum adhering member 501 through the adhering holes. To prevent the electrode assembly 600 from pressing damage caused when the second moving mechanism 400 drives the vacuum adhering member 501 to move down, the buffering assembly is disposed on top of the vacuum adhering member 501. When the bottom of the vacuum adhering member 501 comes into contact with and exerts a force on the electrode assembly 600, the buffering assembly can provide enough buffering to protect the electrode assembly 600, thereby improving the safety of the electrode assembly 600 adhering to the vacuum adhering member 501.

Specifically, the buffering assembly includes a restraining groove 502, telescopic rod mechanisms 503, and restraining connectors 504. The restraining groove 502 is disposed on top of the vacuum adhering member 501 and below the fixing plate 70, and an opening of the restraining groove 502 is disposed facing upward. The telescopic rod mechanisms 503 are disposed in the restraining groove 502. The telescopic rod mechanism 503 includes a first connecting rod and a second connecting rod nested with the first connecting rod, and the second connecting rod is provided with an elastic member. The elastic member can experience elastic deformation when the vacuum adhering member 501 comes into contact with and presses the electrode assembly 600, providing protective buffering. The restraining connector 504 is connected to an end of the first connecting rod away from the second connecting rod and is located above the fixing plate 70, providing restraint and connection so as to prevent the telescopic rod mechanism 503 from falling off.

The foregoing descriptions are only preferred embodiments of this application, but are not intended to limit the protection scope of this application. Any variation or replacement readily figured out by persons skilled in the art within the technical scope disclosed in this application shall fall within the protection scope of this application. Therefore, the protection scope of this application shall be subject to the protection scope of the claims.

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of this application. All such modifications and equivalent replacements shall fall within the scope of claims and specification of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A welding dust removal apparatus, **characterized by** comprising:
a dust removal pipe, one end of the dust removal pipe communicating with a suction apparatus; and
dust suction assemblies, each comprising a first dust suction member and a second dust suction member, wherein the first dust suction member has a first dust suction opening and a first outlet communicating with each other, the second dust suction member has a second dust suction opening and a second outlet communicating with each other, an electrode assembly is placed between the first dust suction opening and the second dust suction opening, and both the first outlet and the second outlet communicate with the other end of the dust removal pipe.

2. The welding dust removal apparatus according to claim 1, **characterized in that** one of the first dust suction opening and the second dust suction opening is disposed facing toward a positive electrode tab of the electrode assembly, and the other is disposed facing toward a negative electrode tab of the electrode assembly.

3. The welding dust removal apparatus according to claim 1 or 2, **characterized in that** the dust removal pipe comprises:
a main dust removal pipe, wherein the main dust removal pipe is connected to the suction apparatus on one end, and the main dust removal pipe communicates with a first connecting pipe and a second connecting pipe on the other end; and
a first dust removal sub-pipe and a second dust removal sub-pipe, wherein one end of the first dust removal sub-pipe communicates with the first connecting pipe, and one end of the second dust removal sub-pipe communicates with the second connecting pipe;
wherein the first outlet communicates with the other end of the first dust removal sub-pipe, and the second outlet communicates with the other end of the second dust removal sub-pipe.

4. The welding dust removal apparatus according to claim 3, **characterized in that** the dust removal pipe further comprises a first adapting pipe and a second adapting pipe, wherein the first adapting pipe communicates with both the first dust removal sub-pipe and the first outlet, and the second adapting pipe communicates with both the second dust removal sub-pipe and the second outlet.

5. The welding dust removal apparatus according to claim 4, **characterized in that**
the first outlet is connected to a first communication sub-pipe, the second outlet is connected to a second communication sub-pipe, and the first communication sub-pipe and the second communication sub-pipe communicate with the first adapting pipe and the second adapting pipe respectively.

6. The welding dust removal apparatus according to claim 5, **characterized in that** the first communication sub-pipe and the second communication sub-pipe are flexible pipes, and a position of the first dust suction opening relative to the second dust suction opening is adjustable.

7. The welding dust removal apparatus according to any one of claims 1 to 6, **characterized in that** an air speed of the first dust suction opening is not lower than 24 m/s; and/or
an air speed of the second dust suction opening is not lower than 24 m/s.

8. The welding dust removal apparatus according to any one of claims 1 to 7, **characterized in that** the number of the dust suction assemblies is N, and the N dust suction assemblies are symmetrically disposed in two groups;
wherein N is an even number.

9. The welding dust removal apparatus according to any one of claims 1 to 8, **characterized in that** the welding dust removal apparatus further comprises:
fixing plates; and
a first position adjustment assembly and a second position adjustment assembly, wherein the first position adjustment assembly and the second position adjustment assembly are movably connected to two opposite sides of the fixing plates, the first position adjustment assembly is connected to the first dust suction member, the first position adjustment assembly is configured to adjust position of the first dust suction member, the second position adjustment assembly is connected to the second dust suction member, and the second position adjustment assembly is configured to adjust position of the second dust suction member.

10. The welding dust removal apparatus according to claim 9, **characterized in that**
the number of the fixing plates is two, and the two fixing plates are spaced apart; and
the number of the dust suction assemblies is four, the four dust suction assemblies are symmetrically disposed in two groups on two opposite sides of the two fixing plates, the first dust suction member of each dust suction assembly and the first position adjustment assembly are spaced apart, and the second dust suction member of each dust suction assembly and the second position adjustment assembly are spaced apart.

11. The welding dust removal apparatus according to claim 10, **characterized in that** the welding dust removal apparatus further comprises:
a third position adjustment assembly and a fourth position adjustment assembly that are disposed between the first position adjustment assembly and the second position adjustment assembly and movably connected to the fixing plates, wherein the third position adjustment assembly is connected to one second dust suction member and one first dust suction member that are adj acent to each other and that are located between the two fixing plates, and the fourth position adjustment assembly is connected to the other second dust suction member and the other first dust suction member that are adjacent to each other and that are located between the two fixing plates;
wherein the first position adjustment assembly and the second position adjustment assembly are disposed on the two fixing plates respectively and located on facing-away sides of the two fixing plates respectively, the first position adjustment assembly is connected to two first dust suction members disposed on one of the facing-away sides of the two fixing plates, and the second position adjustment assembly is connected to two second dust suction members disposed on one of the facing-away sides of the two fixing plates.

12. The welding dust removal apparatus according to any one of claims 1 to 11, **characterized in that** the first dust suction member comprises a first negative pressure nozzle, the first negative pressure nozzle having the first dust suction opening; and/or
the second dust suction member comprises a second negative pressure nozzle, the second negative pressure nozzle having the second dust suction opening.

13. A welding dust removal system, **characterized by** comprising:
a support base;
a first moving mechanism disposed on the support base and configured to move relative to the support base along a horizontal direction;
a second moving mechanism connected to the first moving mechanism and configured to move relative to the first moving mechanism along a vertical direction;
adhering mechanisms connected to the second moving mechanism and configured for adhesion of the electrode assembly; and
the welding dust removal apparatus according to any one of claims 1 to 12 and configured to remove dust from the positive electrode tab and the negative electrode tab of the electrode assembly.

14. The welding dust removal system according to claim 13, **characterized in that** the adhering mechanism comprises:
a vacuum adhering member, wherein the vacuum adhering member is provided with a cavity, the cavity communicates with a vacuumizing apparatus, and adhering holes configured for adhesion of the electrode assembly are provided at the bottom of the vacuum adhering member; and
a buffering assembly disposed on top of the vacuum adhering member, wherein the buffering assembly is connected to the fixing plate of the welding dust removal apparatus and configured to provide buffering when the electrode assembly adheres to the vacuum adhering member.
